# EUROPEAN PATENT SPECIFICATION

(11) **EP 2 873 356 B1**
(45) Date of publication and mention of the grant of the patent: **27.07.2016**
(21) Application number: 14192722.8
(22) Date of filing: 11.11.2014
(51) Int. Cl.: A47J 31/44, A47J 31/46

(54) **A machine for preparing beverages**
Maschine zur Zubereitung von Getränken
Machine de préparation de boissons

(30) Priority: 15.11.2013 IT RE20130084
(43) Date of publication of application: 20.05.2015
(73) Proprietor: Coop Industria - Societa' Cooperativa, 40013 Castel Maggiore (Bologna) (IT)
(72) Inventor: Lazzari, Adriano, Ferrara (IT); Barbiero, Luigi, Selvazzano (PD) (IT)
(74) Representative: Corradini, Corrado

(56) References cited:
- WO-A1-2012/151629
- US-A1- 2010 303 983
- US-A1- 2013 014 647

## Description

The present invention relates to a machine for preparing beverages, typically coffee, tea, or other beverages obtainable by infusion.

As is known, there exist numerous machines for the preparation of hot beverages such as espresso coffee and the like, that to carry out the preparation require cartridges containing the beverage powder.

These machines exhibit a body internally containing a pump for drawing, from a tank, the water necessary for the preparation of the beverage and send it first to a boiler provided with heating means, and subsequently to an infusion assembly able to receive the cartridge, and finally to a beverage dispenser.

In many types of machines, the cartridges are generally inserted into the machine via a space accessible at the top of the machine.

Further, the water tank is located in the rear part of the machine with respect to the beverage dispenser, which is instead positioned in the front part of the machine.

Such a machine is known from US-A-2013/0014647.

During operation, water drawn from the tank by the pump is supplied into the boiler and is brought to high temperature by means of heat exchangers, as well as being directed under pressure through the cartridge so as to extract the beverage with its aromas, with the beverage exiting through the dispenser.

In some known-type machines, when the tank requires refilling with water again, it has to be disconnected from the rear part of the machine in which it is normally located, filled and returned to its original position.

In other types of known machines, the tank is fixed inside the machine and it is therefore necessary to open the upper part of the machine so as to gain access to the tank and newly refill it.

In both cases, as the tanks are in the rear part of the machine, it is often necessary to move the machine to gain access to the tanks themselves, especially when the machine is placed among other electrical domestic appliances or is positioned under a roof, as often happens in kitchens.

The aim of the present invention is to obviate the above-mentioned drawbacks, with a machine for the preparation of beverages which enables loading the water practically and simply.

A further aim of the present invention is to provide a machine for preparation of beverages which can be refilled with water without being displaced or without having to demount the components thereof.

These aims are attained by a machine for preparation of beverages, comprising a body in which an infusion group is housed, able to receive cartridges containing a preparation for the beverage and which exhibits a compartment for inserting cartridges and a tank for containing water for preparation of the drink, the machine being characterised in that it exhibits a conduit for filling the tank accessible from a closer position to a front wall of the body of the machine with respect to the compartment for inserting the cartridges.

This embodiment of the invention makes it possible to refill the machine with water directly from the front part thereof, which is generally more accessible from the rear part.

This enables positioning the machine even in small spaces, since replenishing can take place without having to move the machine.
Further characteristics and advantages of the invention can be deduced from the dependent claims.
Further characteristics and advantages of the invention will emerge from a reading of the description that follows, provided by way of non-limiting example, with the aid of the figures of the accompanying tables, in which:

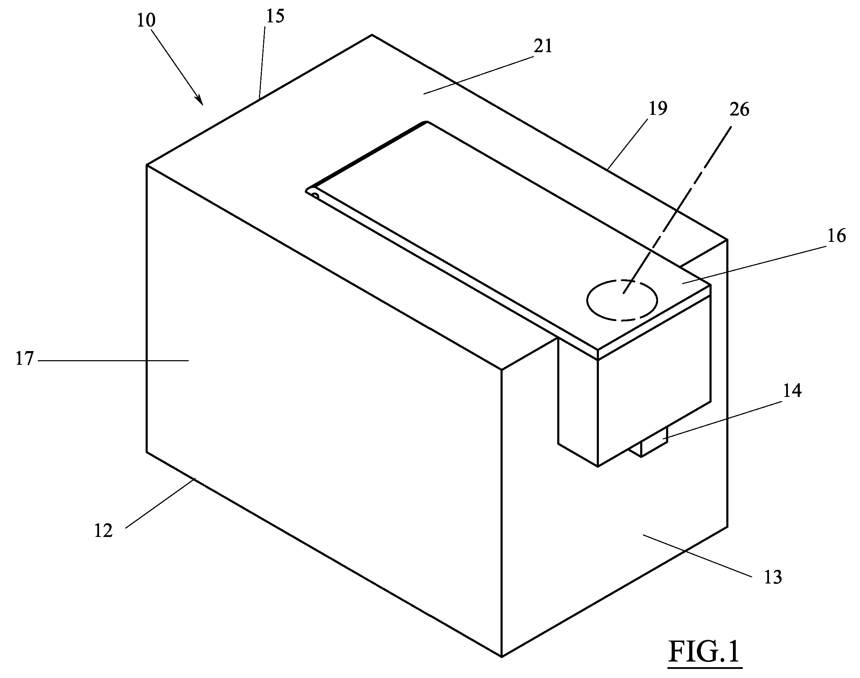

figure 1 is a frontal perspective view of a detail of a machine according to an embodiment of the present invention;
figures 2-4 represent details of the machine of figure 1; and
- figure 5 represents a section according to a vertical plane of the machine of figures 1-4.

The mentioned figures illustrate a machine for the preparation of beverages, denoted in its entirety by reference numeral 10, the beverages being preparable by use of cartridges containing the beverage in powder form, or in general, a preparation to be subjected to infusion.

The machine 10 exhibits a body 12, having a substantially parallelepiped shape, which exhibits a front wall 13, a rear wall 15 and two lateral walls 17,19.

The upper part of the body 12 is closed by a top wall 21.

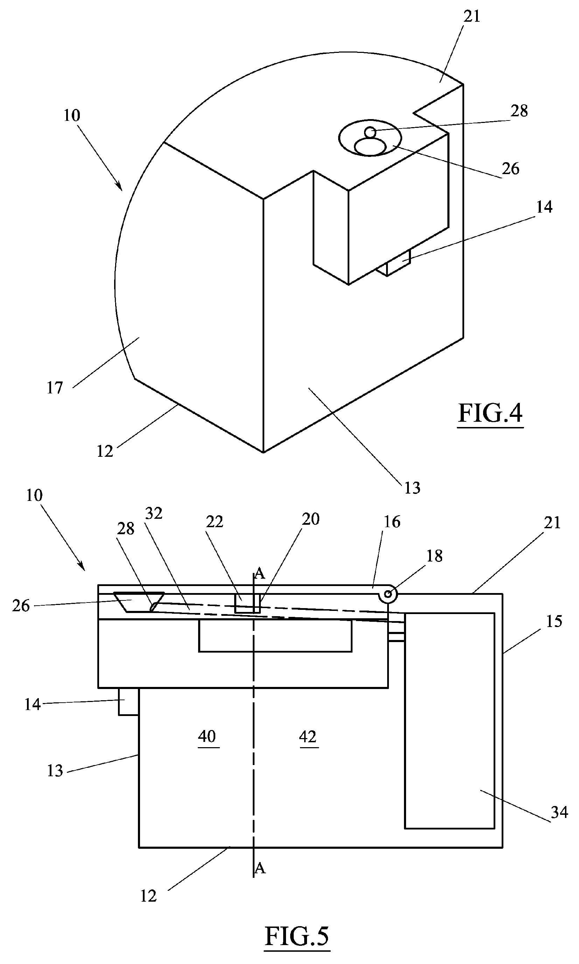

A lever 16 is provided at the upper wall 21 which lever 16 can be rotated in a vertical plane about a hinge 18 (figure 5) so as to move from a lowered horizontal position to a raised position which enables the insertion of a cartridge 22 in a suitable compartment 20 fashioned in the top wall 21.

The walls of the body 12 of the machine define a volume that can in turn be sub-divided into a front portion 40 and a rear portion 42 with respect to the compartment 20 for insertion of the cartridges 22.

This sub-division is also visible in figure 5 where the two portions 40,42 are defined with respect to a dotted line A that passes through the compartment 20 for insertion of cartridges 22.

The machine also exhibits a dispensing group 14 of the beverage located projectingly with respect to the front wall 13.

A tank 24 for containing water is housed in the rear portion 42 of the machine 10 and in a position opposite the dispenser 14.

The machine further exhibits a boiler provided with means for heating water conveyed to it from the tank 34 by means of a pump during functioning of the machine and an infusion group able to receive the cartridge (not shown for reasons of simplicity).

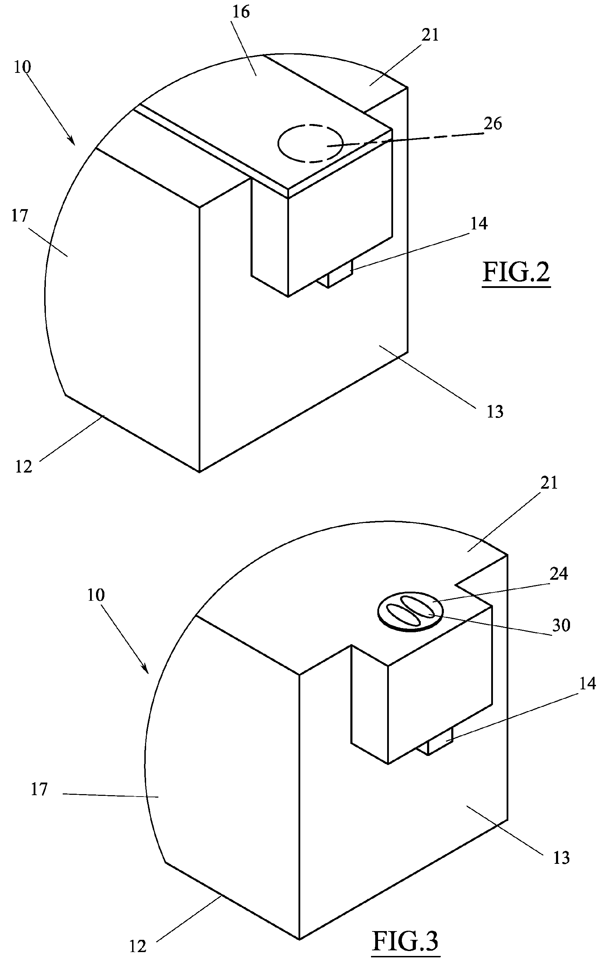

By lifting the lever 16 (figure 2), a protective lid 24 is uncovered, exhibiting notches 30 (figure 3) so that it can be grasped and then raised to reveal a tray 26 exhibiting a hole 28.

The tray 26 is placed at least partially projecting with respect to the front wall 13 of the body 12 of the machine 10.

Further, the tray 26 is placed above the dispensing unit 14.

More in particular, the tray 26 exhibits a concave shape with the hole 28 facing internally of the machine 10 (figure 4).

The hole 28 is preferably facing a lateral wall of the body 12 of the machine 10.

The hole 28 of the tray 26 is in turn in fluid communication with a conduit 32 (figure 5) that opens into the water tank 34 and that can be used for filling thereof.

The perforated tray 26 enables directing the water into the conduit 32 and, via the conduit, into the tank 34, and is accessible from a front position with respect to the compartment 20 for insertion of the cartridges 22. Alternatively, the tray 26 can have a plurality of holes.

The conduit 32 is preferably slightly inclined in the direction of the tank 34 to facilitate the flow of water.

The conduit 32 preferably follows a pathway defined internally of the machine 10 in proximity of a lateral wall 19 of the machine 10, so as not to interfere with the positioning of the cartridge 22 and with the infusion chamber.

Therefore, the conduit 32 for filling the tank 34 is accessible from a position closer to the front wall 13 of the machine 10 with respect to the compartment 20 for insertion of the cartridges 22.

When all or part of the tank 34 is to be filled, it is sufficient to raise the lever 16 so as to access the protective lid 24 and after removing the lid 24, water can be poured into the tray 26.

Following this operation, the water entering the hole 28 continues along the conduit 32 and accumulates in the tank 34.

In this way water can be supplied to the tank 34 without having to move the machine 10.

Obviously modifications or improvements dictated by contingent or particular requirements can be made to the invention as described, without its forsaking the scope of the invention as claimed in the following.

## Claims

1. A machine for preparing beverages, comprising a body (12) in which an infusion group is housed, able to receive cartridges (22) containing a preparation for the beverage and which exhibits a compartment (20) for inserting cartridges (22), a tank (34) for containing water for preparation of the drink, and wherein a dispensing group (14) of the beverage is included at a front wall (13) of the body (12), the machine being **characterised in that** it exhibits a conduit (32) for filling the tank (34) accessible from a closer position to the front wall (13) of the body (12) of the machine (10) with respect to the compartment (20) for inserting the cartridges (22).

2. The machine (10) of claim 1, wherein the tank (34) is located internally of a rear portion (42) of the body (12) of the machine (10).

3. The machine (10) of claim 1, wherein the filling conduit (32) follows a pathway defined internally of the body (12) of the machine (12) in proximity of a lateral wall (19).

4. The machine (10) of claim 1, wherein the conduit (32) is slightly inclined in the direction of the tank (34) so as to facilitate the flow of water.

5. The machine (10) of claim 1, wherein the conduit (32) exhibits, at an opposite end thereof with respect to the tank (34), a holed tray (26).

6. The machine (10) of claim 5, wherein the tray (26) is accessible by removing a lid (24).

7. The machine (10) of claim 6, wherein the lid (24) of the tray (26) is accessible by removing a lever (16) which also covers the compartment (20) for inserting cartridges (22).

8. The machine (10) of claim 5, wherein the tray (26) exhibits a hole (28) facing towards an inside of the machine (10).

9. The machine (10) of claims from 5 to 8, wherein the tray (26) is located above the dispensing group (14).

## Patentansprüche

1. Maschine zum Zubereiten von Getränken, einen Körper (12) umfassend, in dem eine Brühgruppe untergebracht ist, wobei die Maschine in der Lage ist, Kartuschen (22) aufzunehmen, die eine Zubereitung für das Getränk enthalten, und ein Fach (20) zum Einsetzen von Kartuschen (22) und einen Tank (34) zum Aufbewahren von Wasser für das Zubereiten des Getränks aufweist und wobei eine Ausgabegruppe (14) für das Getränk in einer Vorderwand (13) des Körpers (12) enthalten ist, wobei die Maschine **dadurch gekennzeichnet ist, dass** sie eine Leitung (32) zum Füllen des Tanks (34) aufweist, die an einer Position zugänglich ist, die im Verhältnis zum Fach (20) für das Einsetzen der Kartuschen (22) näher an der Vorderwand (13) des Körpers (12) der Maschine liegt.

2. Maschine (10) nach Anspruch 1, wobei der Tank (34) in einem hinteren Abschnitt (42) des Körpers (12) der Maschine (10) angeordnet ist.

3. Maschine (10) nach Anspruch 1, wobei die Füllleitung (32) einem Weg folgt, der im Körper (10) der Maschine (12) in der Nähe einer Seitenwand (19) definiert ist.

4. Maschine (10) nach Anspruch 1, wobei die Leitung (32) in Richtung des Tanks (34) leicht geneigt ist, so dass das Fließen von Wasser erleichtert ist.

5. Maschine (10) nach Anspruch 1, wobei die Leitung (32) an ihrem, im Verhältnis zum Tank (34) entgegengesetzten Ende eine Wanne mit Öffnung (26) aufweist.

6. Maschine (10) nach Anspruch 5, wobei die Wanne (26) durch Abnehmen eines Deckels (24) zugänglich wird.

7. Maschine (10) nach Anspruch 6, wobei der Deckel (24) der Wanne (26) durch Abnehmen eines Hebels (16) zugänglich wird, der außerdem das Fach (20) zum Einsetzen der Kartuschen (22) abdeckt.

8. Maschine (10) nach Anspruch 5, wobei die Wanne (26) eine Öffnung (28) aufweist, die zur Innenseite der Maschine (10) weist.

9. Maschine (10) nach den Ansprüchen 5 bis 8, wobei die Wanne (26) über der Ausgabegruppe (14) angeordnet ist.

## Revendications

1. Machine de préparation de boissons comprenant un corps (12) dans lequel est logé un groupe d'infusion, capable de recevoir des cartouches (22) contenant une préparation pour la boisson et présentant un compartiment (20) pour insérer des cartouches (22), un réservoir (34) pour contenir de l'eau de préparation de la boisson, et dans laquelle un groupe de distribution (14) de la boisson est inclus sur une paroi avant (13) du corps (12), la machine étant **caractérisée en ce qu'**elle présente un conduit (32) pour remplir le réservoir (34) qui est accessible depuis une position plus proche de la paroi avant (13) du corps (12) de la machine (10) que le compartiment (20) pour insérer les cartouches (22).

2. Machine (10) selon la revendication 1, dans laquelle le réservoir (34) se trouve à l'intérieur d'une portion arrière (42) du corps (12) de la machine (10).

3. Machine (10) selon la revendication 1, dans laquelle le conduit de remplissage (32) suit un chemin défini à l'intérieur du corps (12) de la machine (12) à proximité d'une paroi latérale (19).

4. Machine (10) selon la revendication 1, dans laquelle le conduit (32) est légèrement incliné en direction du réservoir (34) de manière à faciliter l'écoulement de l'eau.

5. Machine (10) selon la revendication 1, dans laquelle le conduit (32) présente un plateau percé (26) à son extrémité opposée au réservoir (34).

6. Machine (10) selon la revendication 5, dans laquelle le plateau (26) est accessible en enlevant un couvercle (24).

7. Machine (10) selon la revendication 6, dans laquelle le couvercle (24) du plateau (26) est accessible en enlevant un levier (16) qui recouvre également le compartiment (20) d'insertion de cartouches (22).

8. Machine (10) selon la revendication 5, dans laquelle le plateau (26) présente un trou (28) qui fait face à l'intérieur de la machine (10).

9. Machine (10) selon les revendications 5 à 8, dans laquelle le plateau (26) se trouve au-dessus du groupe de distribution (14).
